# EUROPÄISCHE PATENTANMELDUNG

(11) **EP 1 584 840 A2**
(43) Veröffentlichungstag der Anmeldung: **12.10.2005**
(21) Anmeldenummer: 05007168.7
(22) Anmeldetag: 01.04.2005
(51) Int. Cl.: F16F 15/32

(54) **Auswucht-Gewichte**

(30) Priorität: 05.04.2004 DE 102004017764
(71) Anmelder: GESELLSCHAFT FÜR WOLFRAM-INDUSTRIE MBH, 83278 Traunstein (DE)
(72) Erfinder: von Cetto, Marion, 83308 Trostberg (DE)
(74) Vertreter: Alber, Norbert

(57) **Zusammenfassung**

Die Erfindung betrifft Auswucht-Gewichte (3) für die Räder (2) von Fahrzeugen, insbesondere Personenkraftwagen zum Befestigen an deren Felgen (1), wobei die Auswucht-Gewichte (3) aus Schwermetall, insbesondere Schwermetallen mit einem spezifischen Gewicht von mehr als 13 g/cm³, insbesondere 11 g/cm³, insbesondere 10g/cm³, insbesondere Wolfram, bestehen.

## Beschreibung

### I. Anwendungsgebiet

Die Erfindung betrifft Auswucht-Gewichte.

### II. Technischer Hintergrund

Auswucht-Gewichte werden von den Reifenhändlern und Reifenmonteuren von PKW's an den Felgen befestigt, wenn sich das aus Felge und Reifen bestehende Rad hinsichtlich der Gewichtsverteilung über den Umfang nicht gleichmäßig verhält.

In der Vergangenheit waren derartige Auswucht-Gewichte - um hohes Gewicht bei niedrigen Volumina zu erzielen - aus Blei bzw. Blei-Legierungen. Dies ist aus Umweltschutzgründen nicht mehr erlaubt.

Heute werden Auswucht-Gewichte aus Messing, Bronze, Stahl, Zink oder Zink-Legierungen hergestellt. Sie werden in Streifen mit regelmäßigen Einkerbungen angeboten, so dass sich die einzelnen Elemente von dem Streifen abbrechen bzw. abschneiden lassen, und auf einfache Art und Weise portionieren lassen oder sie werden als fertige Gewichte mit Einkerbungen in 5 g Abstufungen angeboten.

Die Einkerbungen zwischen den einzelnen Elementen sind so tief, dass sie bei der verbleibenden Restdicke der Streifen so weit gebogen werden können, dass er sich an die Innenkontur der Felge anpassen lässt, ohne die einzelnen Stücke des Streifens voneinander zu trennen. Der Nachteil dieser Zink-Legierungen besteht darin, dass sie sehr korrosionsempfindlich sind, und daher beschichtet sein müssen, und bei Beschädigung der Lackierung wieder zu korrodieren beginnen, was vor allem an den Bruchstellen zwischen den einzelnen als Streifen gelieferten Elementen der Fall ist.

Zusätzlich ist Zink leichter als Blei, so dass die Auswucht-Gewichte relativ voluminös sind.

### III. Darstellung der Erfindung

### a) Technische Aufgabe

Es ist daher die Aufgabe gemäß der Erfindung, die vorgenannten Nachteile zu vermeiden.

### b) Lösung der Aufgabe

Diese Aufgabe wird durch Merkmale des Anspruches 1 gelöst. Vorteilhafte Ausführungsformen ergeben sich aus den Unteransprüchen.

Durch die Verwendung von Wolfram als Hauptbestandteil einer Legierung zum Herstellen von Auswucht-Gewichten, wird ein Material mit hoher spezifischer Dichte verwendet, so dass das Volumen der Auswucht-Gewichte relativ gering gehalten werden kann.

Insbesondere kann bei einer vertretbaren Breite von 1 bis 3 cm des Streifens der Streifen so dünn gehalten werden, dass auch ohne Einkerbung zwischen den einzelnen Längenabschnitten die Dicke des Streifens so gering bleibt, dass noch eine ausreichende Biegung des Streifens möglich ist, wie sie für das Aufkleben auf den Innenumfang der Felge benötigt wird, ohne dass die Eigenspannung das spätere Ablösen des aufgeklebten Streifens bewirkt.

Vorteilhaft ist ferner, das geringe Reaktionsvermögen von Wolfram mit Sauerstoff unter den chemischen Bedingungen, der eine Autofelge normalerweise unterliegt, so dass das erfindungsgemäße Auswucht-Gewicht auch nicht lackiert oder beschichtet werden muss.

Wenn dennoch eine farbliche Anpassung an die meist metallisch glänzenden Felgen gewünscht wird, kann dennoch eine Färbung, insbesondere eine Durchfärbung des Auswucht-Gewichtes durch Beimischung eines Farbstoffes in die Wolfram-Legierung, erreicht werden.

Allerdings geht dann der Vorteil des einfachen Recyclings aufgrund nur einer oder zweier enthaltener Materialien unter Umständen verloren.

Der Verwendung von Schwermetallen und insbesondere Wolfram für derartige Anwendungszwecke stand bisher das Vorurteil entgegen, dass Wolfram aufgrund seines hohen Schmelzpunktes nur mit sehr hohem Aufwand geschmolzen und in Form gegossen bzw. Strang gepresst werden kann und auch der hohe Materialpreis gegen eine derartige Verwendung spricht.

Die heute mögliche kostengünstige Sinterung von Wolfram und Wolfram-Legierungen ermöglicht jedoch die notwendige Formgebung und verhindert darüber hinaus auch, dass durch die straßenüblichen Gegebenheiten auftretende mechanische Schläge auf das Auswucht-Gewicht zu einer Deformierung oder Zerstörung führen.

### c) Ausführungsbeispiele

Ausführungsformen gemäß der Erfindung sind im Folgenden beispielhaft näher beschrieben.

Es zeigen:
- Fig. 1:: ein bandförmiges Auswucht-Gewicht,
- Fig. 2:: ebenfalls ein bandförmiges Auswucht-Gewicht und
- Fig. 3:: eine Anreihung von einzelnen Gewichten auf einem Trägermaterial (Montageklebeband).

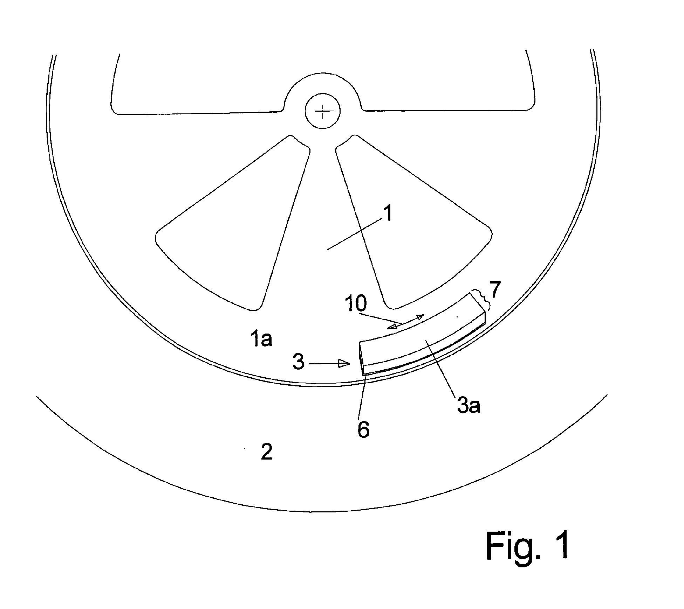

Die Figuren 1 bis 3 zeigen jeweils einen Teil des Rades eines Fahrzeuges, insbesondere eines PKW, mit einem Teil der Felge 1, auf deren Felgenbett 1a in üblicher Art und Weise der Reifen 2 montiert ist.

Dabei sind auf dem Innenumfang des Felgenbettes 1a Auswuchtgewichte 3, 3' bzw. 3"- dargestellt.

Dabei ist ersichtlich, dass der Innenumfang des Felgenbettes 1 a aufgrund seiner Biegung keine gerade Fläche darstellt, sondern eine konkav gewölbte Fläche.

In Figur 1 muss das sich in Umfangsrichtung entlang des Felgenbettes erstreckende streifenförmige Auswuchtgewicht 3 sich daher dieser Biegung anpassen. Das streifenförmige Auswuchtgewicht 3 ist deshalb so dimensioniert, dass die Dicke des Streifens, gemessen quer zur Oberfläche des Felgenbettes, die kleinste Dimension des Streifens ist, und insbesondere nicht größer als 7 mm, insbesondere nicht größer als 5 mm, insbesondere nicht größer als 3 mm ist.

Die Breite des streifenförmigen Auswuchtgewichtes 3 sollte dabei möglichst nicht größer als 2 cm, insbesondere nicht größer als 1,5 cm, sein, um den Streifen auch bei schmaler ausgebildeten Felgenbetten sicher befestigen zu können.

Um das streifenförmige Gewicht 3 der Krümmung des Felgenbettes 1 a anpassen zu können, muss es eine begrenzte Biegsamkeit um eine Achse, die parallel zu seiner Breite liegt, aufweisen, ist jedoch insbesondere bereits anfangs mit einer entsprechenden Krümmung ausgestattet, so dass in Anpassung an die unterschiedlichen Felgengrößen die vorhandene Ausgangs-Krümmung nur geringfügig beim Befestigen vergrößert oder verkleinert werden muss.

Das Gewicht 3 wird mittels eines Klebers, vorzugsweise mittels eines auf der Unterseite des Streifens angeordneten Doppelklebebandes 6 oder einer entsprechenden festen Kleberschicht, die vor Gebrauch durch eine abziehbare Schutzfolie geschützt ist, aufgeklebt.

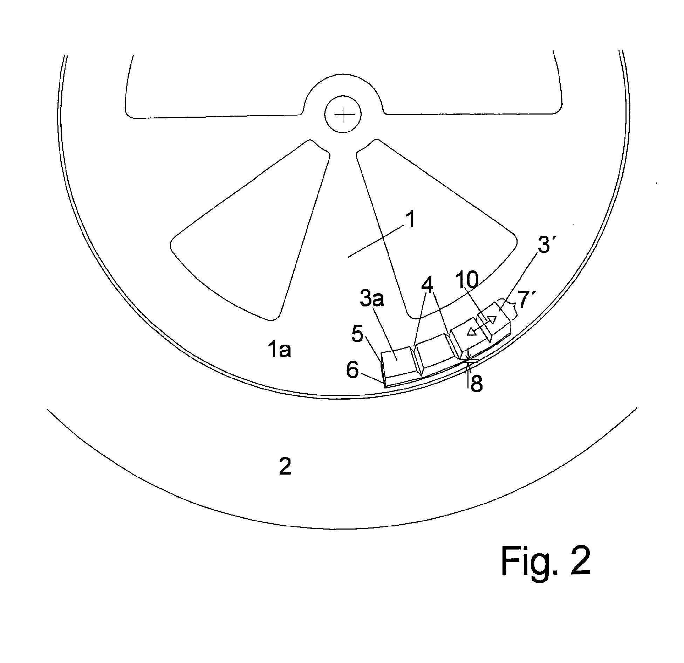

Figur 2 zeigt ein ähnliches streifenförmiges Auswuchtgewicht 3', welches jedoch in regelmäßigen oder auch unregelmäßigen, sich jedoch wiederholenden Abständen entlang der Längserstreckung 10 des bandförmigen Auswuchtgewichtes 3' Einkerbungen 4 aufweist, die von der Oberseite 3a aus, sich über die gesamte Breite 7 erstreckend, vorzugsweise keilförmig in den Streifen 3' hineinerstrecken, so dass die verbleibende Restdicke 8 unter den Einkerbungen nur einen Bruchteil der ursprünglichen Dicke des streifenförmigen Gewichtes beträgt.

In diesem Fall sollte die Restdicke 8 nicht größer als 1,5 mm, insbesondere nicht größer als 1 mm, insbesondere nicht größer als 0,5 mm sein.

Der Benutzer bricht von dem bandförmigen Gewicht 3' die als Auswuchtgewicht benötigte Menge, also das benötigte Gewicht, ab, indem er den Streifen an einer der Einkerbungen 4 knickt und dadurch den Streifen abbricht. Das Gewicht eines Abschnittes zwischen zwei Einkerbungen ist entweder immer gleich und bekannt, z.B. 5 Gramm, oder auch auf der Oberseite des Streifens 3 eingeprägt und jederzeit sichtbar.

Die Länge der einzelnen Abschnitte zwischen zwei Einkerbungen 4 sollte dabei so kurz wie möglich sein, insbesondere nicht größer als 15 mm, insbesondere nicht größer als 10 mm, insbesondere nicht größer als 7 mm, denn bei dieser Abschnittslänge kann auch bei einer in sich geraden Unterseite des einzelnen Abschnittes die sich dann über die Abschnittslänge variierende Abstand zwischen Felgenbett und dem Abschnitt des Streifens ausgeglichen werden durch die nur einige Zehntel oder maximal 1 mm dicke Schicht des Klebers bzw. Doppelklebebandes 8.

Dadurch wird erreicht, dass es ausreichend ist, wenn das streifenförmige Gewicht 3' nur im Bereich seiner Einkerbungen 4 leicht gebogen bzw. geknickt werden kann, um den Streifen insgesamt der Biegung des Felgenbettes 1 a anzupassen.

Dies bewirkt, dass im Bereich zwischen den Einkerbungen die Dicke des streifenförmigen Auswuchtgewichts 3' wesentlich größer gewählt werden kann als bei der Bauform ohne Einkerbungen, und damit auf der gleichen Grundfläche eines Auswuchtgewichtes eine größere Masse und damit ein besseres Auswuchtergebnis erzielt werden kann.

Durch die erfindungsgemäße Beschaffenheit der Auswuchtgewichte ist nicht zu befürchten, dass die durch Knicken und Abbrechen blanken, nicht lackierten Bruchstellen 5 des bandförmigen Elementes zu korrodieren beginnen.

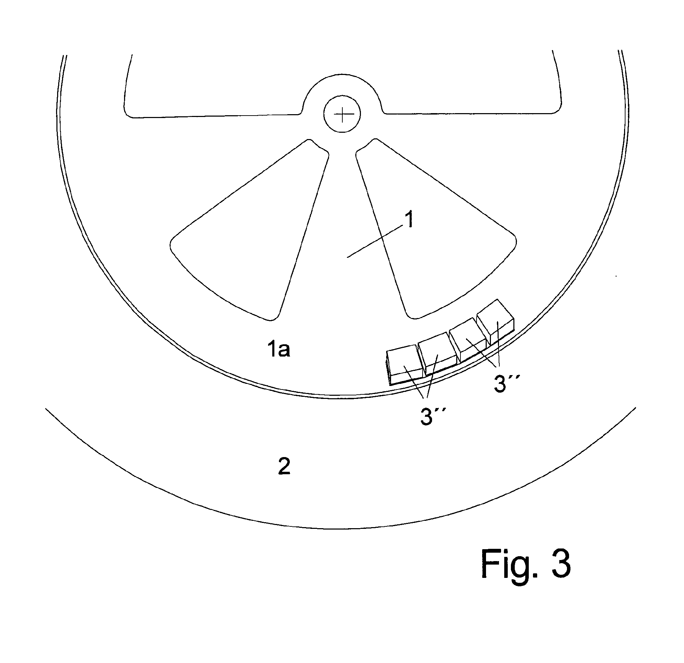

Figur 3 zeigt eine Lösung, bei dem die benötigte Menge an Auswuchtgewichten zusammengesetzt wird aus einzelnen, kleinen, rechteckigen und insbesondere in der Aufsicht betrachtet quadratischen Auswucht-Gewichten 3", die jeweils ein bekanntes oder auch aufgedrucktes Gewicht besitzen, und zu diesem Zweck auch in unterschiedlichen Größen und damit Gewichten verfügbar sein können.

Diese einzelnen Gewichte werden dann vorzugsweise in Reihe hintereinander, wiederum entlang der Umfangsrichtung, auf der Innenseite des Felgenbettes 1 a aufgeklebt, wie zuvor beschrieben.

Der Vorteil dieser Lösung besteht darin, dass es keine nach dem Ablängen des streifenförmigen Gewichtes blanken Bruchstellen gibt, und deshalb zum Zwecke einer anpassenden Farbgebung der Gewichte 3" an die Farbe der Felge an Oberseite 3a und Umfangsflächen lackiert sein können, da kein Abrechen erfolgt, wobei dann an der Bruchstelle 5 die Lackierung nicht vorhanden wäre.

Damit ist es ausreichend, die Gewichte zwecks Farbgebung lediglich an den Außenflächen zu lackieren. Vorzugsweise werden die Gewichte dabei auf einem flexiblen Montageband hintereinander befestigt angeboten, welches hinter der gewünschten Anzahl von Gewichten vom Verwenden abgeschnitten werden kann. Das Montageband hat eine klebende Unterseite oder ist gar ein Doppelklebeband 6.

Ein weiterer Vorteil besteht darin, dass die Wuchtgewichte in bandförmiger Form hergestellt werden können und so leichter ein höherer Automatisierungsgrad bei der Montage erreicht werden kann.

### BEZUGSZEICHENLISTE

- 1: Felge
- 1 a: Felgenbett
- 2: Reifen
- 3, 3': bandförmiges Gewicht
- 3": rechteckiges, quadratisches Gewicht
- 3a: Oberseite
- 4: Einkerbung
- 5: Bruchstelle
- 6: Doppelklebeband
- 7: Breite
- 8: Restdicke
- 10: Längsrichtung

## Patentansprüche

1. Auswucht-Gewicht für die Räder von Fahrzeugen, insbesondere Personenkraftwagen zum Befestigen an deren Felgen
**dadurch gekennzeichnet, dass**
das Auswucht-Gewicht aus Schwermetall, insbesondere Schwermetallen mit einem spezifischen Gewicht von mehr als 13 g/cm³, insbesondere 11 g/cm³, insbesondere 10g/cm³, insbesondere Wolfram, besteht.

2. Auswucht-Gewicht nach Anspruch 1,
**dadurch gekennzeichnet , dass**
die Auswucht-Gewichte bandförmig mit einer Breite zwischen 1 und 5 cm, insbesondere zwischen 1 und 2 cm gestaltet sind und auf der Unterseite mit einem Kleber, insbesondere einem Doppelklebeband, beschichtet sind, zum Aufkleben auf der Felge.

3. Auswucht-Gewicht nach einem der vorhergehenden Ansprüche,
**dadurch gekennzeichnet, dass**
das Auswucht-Gewicht, insbesondere das bandförmige bzw. streifenförmige Auswucht-Gewicht, in Längserstreckung regelmäßige Einkerbungen von der Oberseite her aufweist und die restliche Dicke im Bereich der Einkerbung nicht größer als 1,5 mm, insbesondere nicht größer als 1 mm, insbesondere nicht größer als 0,5 mm ist.

4. Auswucht-Gewicht nach einem der vorhergehenden Ansprüche,
**dadurch gekennzeichnet , dass**
die maximale Dicke des Auswucht-Gewichtes, insbesondere des band- oder streifenförmigen Auswucht-Gewichtes, nicht größer als 7 mm, insbesondere nicht grö-βer als 5 mm, insbesondere nicht größer als 4 mm, insbesondere nicht größer als 2 mm, und insbesondere eine gleichmäßige Dicke ohne Einkerbungen aufweist.

5. Auswucht-Gewicht nach einem der vorhergehenden Ansprüche,
**dadurch gekennzeichnet ,dass**
das bandförmige Auswucht-Gewicht schräg ansteigende Seitenflanken aufweist.

6. Auswucht-Gewicht nach einem der vorhergehenden Ansprüche,
**dadurch gekennzeichnet ,dass**
das Auswucht-Gewicht aus einer Wolfram-Legierung mit 50 Gewichts-% bis 99,5 Gewichts-%, insbesondere von 90 Gewichts-%.. bis 95 Gewichts-% Wolfram aufweist.

7. Auswucht-Gewicht nach einem der vorhergehenden Ansprüche,
**dadurch gekennzeichnet , dass**
das Auswucht-Gewicht aus einer gesinterten Wolfram-Legierung besteht.

8. Auswucht-Gewicht nach einem der vorhergehenden Ansprüche,
**dadurch gekennzeichnet, dass**
das Auswucht-Gewicht aus der Schwermetall-Legierung, insbesondere Wolfram-Legierung, besteht und der Kleber bzw. das Klebeband von dem Auswucht-Gewicht entfernbar ist.

9. Auswucht-Gewicht nach einem der vorhergehenden Ansprüche,
**dadurch gekennzeichnet, dass**
das Auswucht-Gewicht mit einer an die Rad-Farbe angeglichenen Farbe gefärbt, insbesondere durchgefärbt ist.
